# EUROPÄISCHE PATENTSCHRIFT

(11) **EP 0 564 824 B1**
(45) Veröffentlichungstag und Bekanntmachung des Hinweises auf die Patenterteilung: **17.05.1995**
(21) Anmeldenummer: 93103536.4
(22) Anmeldetag: 05.03.1993
(51) Int. Cl.: B60G 15/06, B60G 11/16, F16F 1/12

(54) **Lagerung für ein Federbein eines Kraftfahrzeugs**
Support for a suspension strut of a motor car
Support pour une jambe de suspension d'une voiture automobile

(30) Priorität: 03.04.1992 DE 4211176
(43) Veröffentlichungstag der Anmeldung: 13.10.1993
(73) Patentinhaber: Dr.Ing.h.c. F. Porsche Aktiengesellschaft, 70435 Stuttgart (DE)
(72) Erfinder: Germano, Francesco, W-7123 Sachsenheim 1 (DE); Wöhler, Hans-Jürgen, D-7000 Stuttgart 80 (DE)

(56) Entgegenhaltungen:
- DE-A- 3 620 774
- DE-B- 1 199 634
- FR-A- 2 637 338
- GB-A- 2 026 131
- REVUE TECHNIQUE AUTOMOBILE Bd. 31, Nr. 352, Januar 1976, BOULOGNE-BILLANCOURT FR Seite 199 'Etude Peugeot 504'
- REVUE TECHNIQUE AUTOMOBILE Bd. 33, Nr. 374, Januar 1978, BOULOGNE-BILLANCOURT FR Seiten 47 - 52 'Etude Lancia Bèta'

## Beschreibung

Die Erfindung bezieht sich auf eine Lagerung für ein Federbein eines Kraftfahrzeugs nach dem Oberbegriff des Anspruchs 1.

Aus der DE-36 20 774 A1 ist ein Federbein bekannt, bei dem eine Schraubenfeder über eine gummielastische Aufnahme an einem aufbauseitig gehaltenen Federteller abgestützt ist. Die Elastizitäten über die Auflage sind aufgrund der Freiräume zum Federteller unterschiedlich, so daß eine Beulneigung der Feder begünstigt wird.

Aus der FR-A 2 637 338, die dem Oberbegriff des Anspruchs 1 entspricht, ist eine Lagerung für ein Federbein eines Kraftfahrzeugs am Fahrzeugaufbau bekannt, die einen eine elastische Auflage haltenden Federteller aufweist, an dem sich eine Schraubenfeder abstützt. Der Federteller weist eine der Steigung der Feder entsprechende Schrägstellung auf und ist zur elastischen Abstützung der letzten Federwindung mit einer elastischen Auflage gleicher Dicke ausgebildet. Hierdurch wird im wesentlichen erreicht, daß eine Beulung der Schraubenfeder beim Federungsvorgang weitestgehend vermieden wird. Diese Lagerung läßt sich aber nicht einfach an verschiedene Umstände anpassen.

Aufgabe der Erfindung ist es, eine verbesserte Lagerung für ein Federbein der erfindungsgemäßen Art zu schaffen, die ebenfalls eine optimale Führung der Feder unter Vermeidung einer Beulung gewährleistet.

Diese Aufgabe wird erfindungsgemäß durch die kennzeichnenden Merkmale des Anspruchs 1 gelöst. Weitere vorteilhafte Merkmale beinhalten die Unteransprüche.

Die mit der Erfindung hauptsächlich erzielten Vorteile bestehen darin, daß die elastische Auflage eine der Steigung der Feder angepasste Stützfläche aufweist und über ein Distanzelement die Auflage an einem aufbauseitigen Federteller gehalten wird. Die Distanzscheibe ist in der Weise ausgestaltet, daß sich zumindest im Abstützbereich der Feder in der elastischen Auflage eine gleiche Wanddicke und somit eine gleiche Elastizität ausbildet.

Die elastische Auflage weist eine zur Federbeinlängsachse geneigte Abstützfläche auf, der eine parallele Anlagefläche, entweder gebildet aus Nocken im Distanzelement oder einer durchgehenden Fläche einer weiteren Ausführung des Distanzelements gegenübersteht.

In jedem Fall ist das Distanzelement in der Weise ausgebildet, daß sich im Bereich der Abstützung der Feder an der elastischen Auflage jeweils eine gleiche Elastizität ausbildet. Die Nocken am Distanzelement tragen zur Steifigkeit bei.

Damit die Feder keine anliegende Federwandungen im Endbereich aufweisen muß, ist die Feder-Abstützfläche entsprechend der Steigung der Federwindung angestellt. Die Lagerfläche des Distanzelements ist dagegen rechtwinklig zur Federbeinachse ausgerichtet, so daß sich ein keilförmiges Distanzelement und eine keilförmige Auflage ergibt.

Das Distanzelement, bestehend aus einem starren und leichten Kunststoffteil kann aus einem Ring bestehen oder im Bereich eines federnden Brückengliedes in der elastischen Auflage unterbrochen sein, damit eine Federwirkung nicht behindert wird.

Zum Höhenausgleich können auch mehrere Distanzelemente verwendet werden.

Das federnde Brückenglied soll bei einem Federungsvorgang eine Anlage der Federwindung an der Feder-Abstützfläche gewährleisten. Außerdem wird erreicht, daß das Federende über einen Winkel von ca. 270° abgestützt ist.

Bei einer Ausbildung des Distanzelements als Scheibe mit durchgehender Anlage- und Lagerfläche ist die elastische Auflage mit einer entsprechend durchgehenden Stützbodenfläche ausgebildet. Dieses Distanzelement kann zur Gewichtserleichterung mit kreisringförmig verlaufenden Nuten in einer der Flächen ausgebildet sein, was auch bei einem Nocken aufweisenden Distanzelement der Fall sein kann.

Ausführungsbeispiele der Erfindung sind in der Zeichnung dargestellt und werden im folgenden näher beschrieben.
Es zeigen
- Fig. 1: eine schaubildliche Darstellung der aus einer Feder einer elastischen Auflage und einem Distanzelement zusammengesetzten Federeinheit,
- Fig. 2: die Einzelteile der Federeinheit in schaubildlicher Darstellung vor einem Zusammenbau,

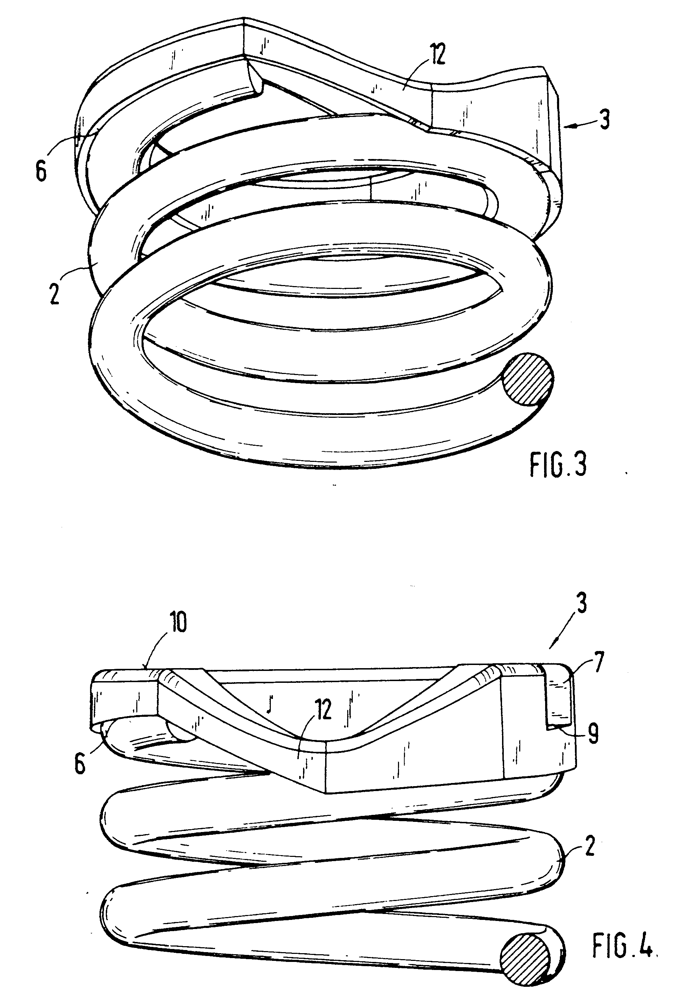

- Fig. 3: eine Darstellung der an der elastischen Auflage abgestützten Feder mit Brückenglied,
- Fig. 4: eine Ansicht auf das Brückenglied,

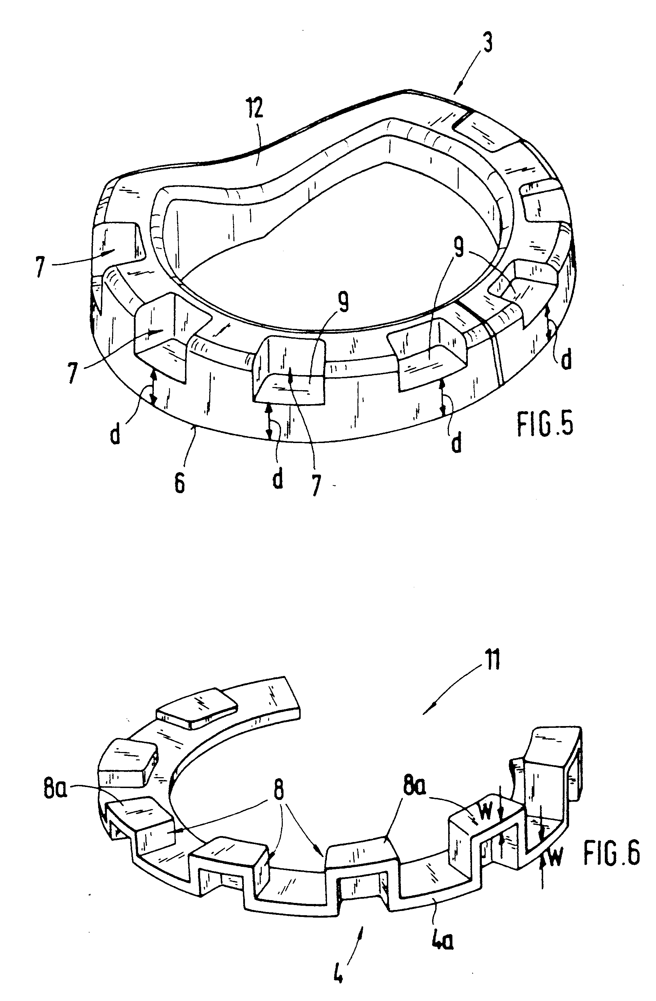

- Fig. 5: eine Draufsicht auf die elastische Auflage mit Ausnehmungen für die Nocken des Distanzelements,
- Fig. 6: eine Draufsicht auf das Distanzelement mit den Nocken,
- Fig. 7: eine Ansicht der elastischen Auflage von der der Feder zugerichteten Abstützfläche,
- Fig. 8: eine weitere Ausführung eines Distanzelements mit einer ebenen Anlagefläche und längs verlaufenden Nuten, und
- Fig. 9: eine weitere Ausführung eines Distanzelements mit Nocken und längs verlaufenden Nuten der dem Federteller zugerichteten Lagerfläche.

Eine Federeinheit 1 umfasst ein am Fahrzeugaufbau abgestütztes Federbein (nicht dargestellt), zu dem koaxial eine Spiralfeder 2 angeordnet ist, die sich über eine elastische Auflage 3 und ein zwischengeschaltetes Distanzelement 4 an einem Federteller 5 abstützt, der wiederum am Fahrzeugaufbau gehalten ist.

Die elastische Auflage 3 weist eine der Windungssteigung der Feder 2 entsprechend schräg angestellte Abstützfläche 6 auf, in der die letzte Federwindung eingebettet ist. Gegenüberliegend dieser Fläche sind Ausnehmungen 7 für Nocken 8 des Distanzelements 4 vorgesehen, die in den Ausnehmungen 7 eingepasst sind.

Die der Abstützfläche 6 gegenüberliegenden Flächen 10 zwischen den Ausnehmungen 7 der Auflage sind rechtwinklig zur Federbeinachse L angestellt, so daß sich verschieden tiefe Ausnehmungen 7 ergeben, in die entsprechend hohe Nocken 8 hineinragen und die Auflage 3 abstützen.

Die Ausnehmungen 7 weisen hierzu Stützbodenflächen 9 auf, die parallel zu Feder-Abstützflächen 6 verlaufen und sich somit zwischen diesen Flächen 9 und der Abstützfläche 6 jeweils eine gleiche Dicke d ergibt und hierdurch die Elastizität in diesem Bereich über den Umfang der Auflage 3 gleichbleibt.

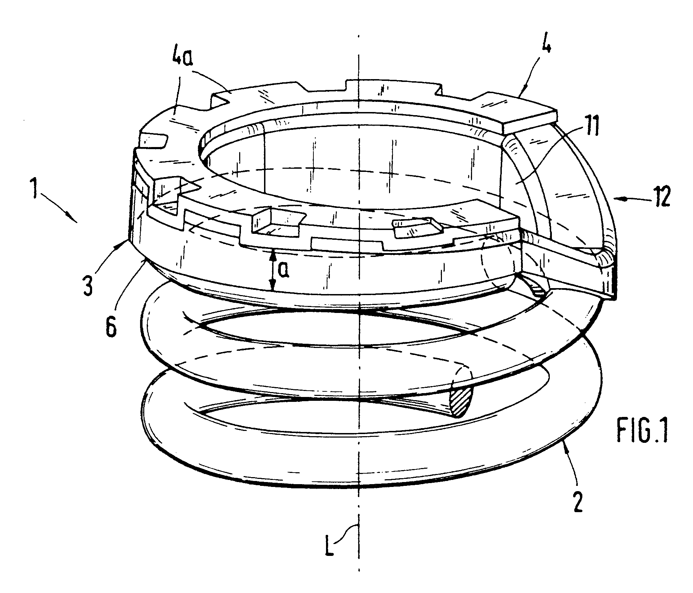

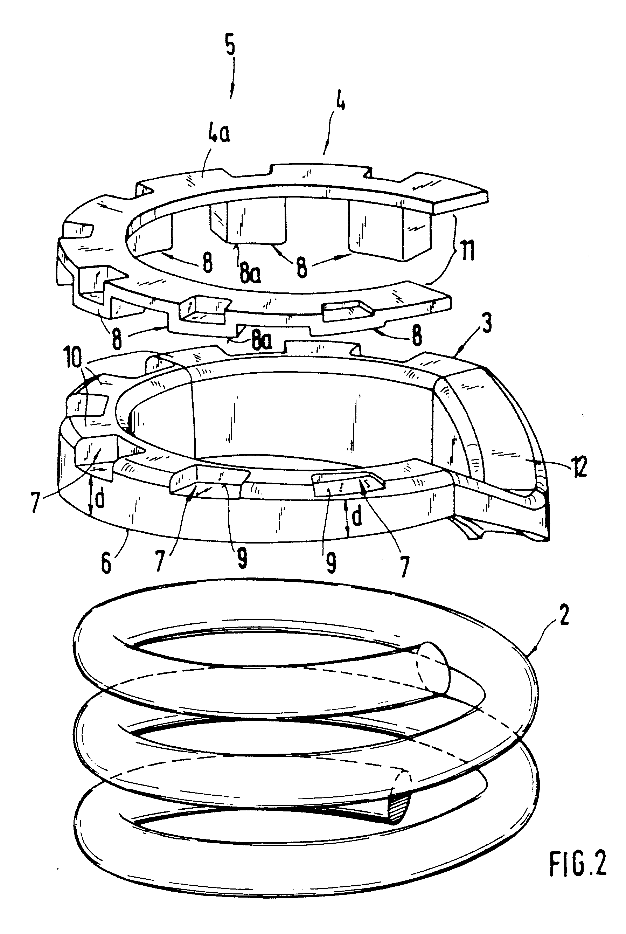

Das Distanzelement 4 besteht aus einem starren Kunststoffteil mit einer ringförmigen Platte gleicher Wandstärke W, aus der die Nocken 8 herausgeformt sind, die wiederum die Wandstärke der Platte aufweisen. Das Element 4 kann als geschlossener Ring ausgebildet sein oder eine Unterbrechung mit einem Freiraum 11 gemäß der Fig. 1 und 2 aufweisen. Dieser ist im Bereich eines federnden Brückengliedes 12 an der Auflage 3 vorgesehen.

Das Brückenglied 12 verbindet die Feder-Abstützfläche 6 in der Weise miteinander, daß die Endwindung der Feder 2 über einen Winkel bereich von ca. 270° anliegt. Auch wird eine Anlage bei Federungsvorgängen am Brückenglied 12 gewährleistet.

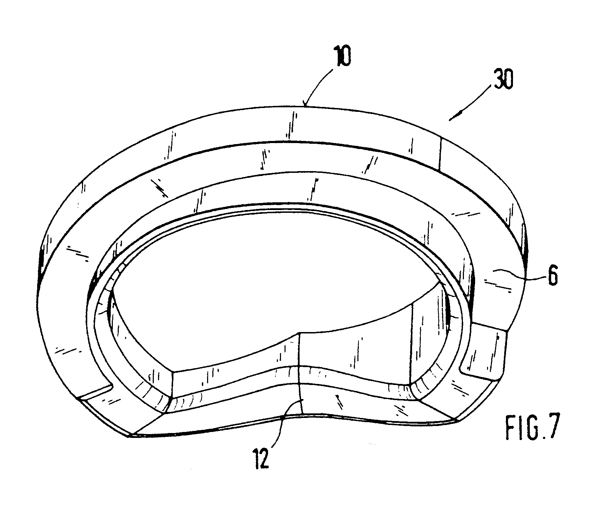

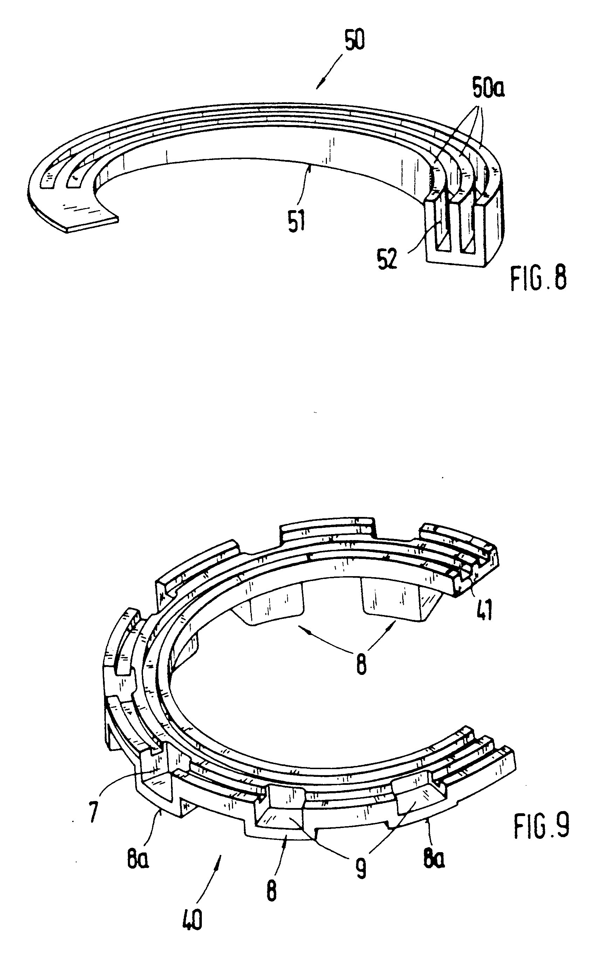

Das Distanzelement kann nach einer weiteren Ausführung gemäß Fig. 8 aus einem eine keilförmige Scheibe umfassenden Teil 50 bestehen, das eine durchgehende Anlagefläche 51 aufweist. An dieser Fläche 51 liegt dann ebenfalls die durchgehende Stützbodenfläche 10 der Auflage 3 an. Eine derartige Auflage 30 ist in Fig. 7 näher gezeigt. Zur Gewichtserleichterung ist das Distanzelement 50 mit längs verlaufenden Nuten 52 ausgeführt.

Das Distanzelement 40 mit Nocken 8 gemäß Fig. 8 kann ebenfalls mit längs verlaufenden Nuten 41 versehen sein.

Die Feder-Abstützfläche 6 ist entsprechend der Windungssteigung der Feder 2 geneigt und zur gegenüberliegenden weiteren Flächen 10 unter einem Winkel angeordnet, wobei diese Fläche 10 parallel zum Federteller 5 verläuft. Zum Erzielen einer gleichen Elastizität in der Auflage 3 ist das Distanzelement 4 vorgesehen, welches entweder Nocken 8 oder eine durchgehende Anlagefläche 51 aufweist (Fig. 8), die eine gleiche Dicke der Auflage im Bereich der Federabstützung sicherstellt, wodurch eine Beulneigung der Feder 2 verhindert wird.

## Patentansprüche

1. Eine Lagerung für ein Federbein eines Kraftfahrzeuges am Kraftfahrzeugaufbau, die einen eine elastische Auflage (3; 30) haltenden Federteller (5) aufweist, an dem sich eine Schraubenfeder (2) abstützt, wobei die elastische Auflage (3; 30) eine der Steigung der Feder (2) entsprechend geneigt verlaufende Feder-Abstützfläche (6) und eine im Abstützbereich der Feder (2) gleiche Elastizität aufweist, **dadurch gekennzeichnet**, daß die Auflage (3; 30) auf einem am Federteller (5) gehaltenen Distanzelement (4; 40; 50) gelagert ist und das Distanzelement (4; 40; 50) Anlageflächen (8a) bzw. eine Anlagefläche (51) für die elastische Auflage (3; 30) aufweist, die im Abstützbereich der Feder (2) einen gleichbleibenden Abstand (a) zur Feder-Abstützfläche (6) der Auflage (3; 30) besitzt.

2. Lagerung nach Anspruch 1, **dadurch gekennzeichnet**, daß das Distanzelement (4; 40; 50) keilförmig ausgebildet ist und die Anlagefläche (8a; 51) parallel zur Feder-Abstützfläche (6) der elastischen Auflage (3; 30) verläuft und beide Flächen unter einem gleichen Winkel zur Längsachse (L) des Federbeines bzw. der Feder (2) angestellt sind, wobei die den Abstützflächen (8a; 51) abgekehrte Lagerfläche (4a; 50a) des Distanzelements (4; 50) am Federteller (5) unter einem rechten Winkel zur Längsachse (L) des Federbeines bzw. der Feder (2) verläuft.

3. Lagerung nach Anspruch 1 oder einem der vorhergehenden Ansprüche, **dadurch gekennzeichnet**, daß die elastische Auflage (3) dem Distanzelement (4; 40) zugerichtete Ausnehmungen (7) aufweist, die in einer jeweils gleichen Ebene angeordnete Stützbodenflächen (9) aufweisen, die jeweils in einem gleichen Abstand (a) zur Feder-Abstützfläche (6) angeordnet sind und in den Ausnehmungen (7) jeweils Nocken (8) des Distanzelements (4; 40) eingreifen, die mit ihren Flächen (8a) an den Stützbodenflächen (9) anliegen.

4. Lagerung nach Anspruch 1 oder einem der vorhergehenden Ansprüche, **dadurch gekennzeichnet**, daß das Distanzelement (4; 40; 50) aus einem starren einteiligen Kunststoffsegment besteht und ein plattenförmiges Teil mit gleicher Wanddicke (W) umfasst, an das die Nocken (8) mit einer entsprechend gleichen Wanddicke (W) angeformt sind.

5. Lagerung nach Anspruch 1 oder einem der vorhergehenden Ansprüche, **dadurch gekennzeichnet**, daß die elastische Auflage (3) aus einem Ring besteht, der zwischen einem Ende der Feder (2) und der an der Stützfläche (6) anliegenden Windung einen vom Distanzelement (4; 40; 50) federnden Bereich (12) aufweist.

6. Lagerung nach Anspruch 5, **dadurch gekennzeichnet**, daß das Distanzelement (4; 40; 50) in diesem Bereich (12) der elastischen Auflage (3; 30) einen Freiraum (11) ausbildet.

7. Lagerung nach den Ansprüchen 5 und 6, **dadurch gekennzeichnet**, daß der Bereich (11) von einem federnden Brückenglied (12) in der elastischen Auflage (3; 30) gebildet wird, das als dynamische Anlage einer Endwindung der Feder (2) an der Feder-Abstützfläche (6) ausgestaltet ist.

8. Lagerung nach den Ansprüchen 5, 6 oder 7, **dadurch gekennzeichnet**, daß das Distanzelement (4; 40; 50) im Bereich des federnden Brückengliedes (12) unterbrochen ist.

9. Lagerung nach den Ansprüchen 1 oder 2, **dadurch gekennzeichnet**, daß das Distanzelement (50) eine durchgehende Anlagefläche (51) aufweist, die einer entsprechend angestellten und durchgehenden Stützbodenfläche (10) gegenübersteht und die Flächen (51 und 10) unter einem Winkel zur Federbeinlängsachse (L) angestellt sind und das Distanzelement (50) eine dem Federteller (5) unter einem rechten Winkel zur Federbeinlängsachse (L) zugerichtete Lagerfläche (50a) aufweist.

10. Lagerung nach Anspruch 9, **dadurch gekennzeichnet**, daß im Distanzelement (40; 50) längsverlaufende Nuten (41; 52) angeordnet sind.

## Claims

1. A mounting for a shock-absorbing leg of a motor vehicle on the motor-vehicle body, the mounting comprising a spring plate (5) which retains a resilient support (3; 30) and on which a helical spring (2) is supported, wherein the resilient support (3; 30) comprises a spring support face (6) extending at a inclination corresponding to the pitch of the spring (2) and has the same degree of elasticity in the support region of the spring (2), **characterized in that** the support (3; 30) is mounted on a spacer member (4; 40; 50) held on the spring plate (5), and the spacer member (4; 40; 50) has abutment faces (8a) or one abutment face (51) for the resilient support (3; 30), which is at a constant distance (**a**) from the spring support face (6) of the support (3; 30) in the support region of the spring (2).

2. A mounting according to Claim 1, **characterized in that** the spacer member (4; 40; 50) is made wedge-shaped and the abutment face (8a; 51) extends parallel to the spring support face (6) of the resilient support (3; 30), and the two faces are set at the same angle to the longitudinal axis (**L**) of the shock-absorbing leg or the spring (2), wherein the bearing face (4a; 50a) - remote from the support faces (8a; 51) - of the spacer member (4; 50) on the spring plate (5) extends at a right angle to the longitudinal axis (**L**) of the shock-absorbing leg or the spring (2).

3. A mounting according to Claim 1 or one of the preceding Claims [*sic*], **characterized in that** the resilient support (3) has recesses (7) facing the spacer member (4; 40) and having support-base faces (9) which are each situated in the same plane and which are each arranged at the same distance (**a**) from the spring support face (6), and cams (8) of the spacer member (4; 40) engage respectively in the recesses (7), the cams (8) resting with the faces (8a) thereof on the support-base faces (9).

4. A mounting according to Claim 1 or one of the preceding Claims, **characterized in that** the spacer member (4; 40; 50) comprises a rigid, one-piece plastics segment and comprises a plate-shaped part with the same wall thickness (**W**), on which the cams (8) are integrally formed with a corresponding equal wall thickness (**W**).

5. A mounting according to Claim 1 or one of the preceding Claims, **characterized in that** the resilient support (3) comprises a ring provided with a resilient region (12) [spaced] from the spacer member (4; 40; 50) between one end of the spring (2) and the coil resting on the support face (6).

6. A mounting according to Claim 5, **characterized in that** the spacer member (4; 40; 50) forms a free space (11) in this region (12) of the resilient support (3; 30).

7. A mounting according to Claims 5 and 6, **characterized in that** the region (11) is formed by a resilient bridge member (12) in the resilient support (3; 30), the bridge member (12) being designed as a dynamic abutment of an end coil of the spring (2) on the spring support face (6).

8. A mounting according to Claim 5, 6 or 7, **characterized in that** the spacer member (4; 40; 50) is interrupted in the region of the resilient bridge member (12).

9. A mounting according to Claim 1 or 2, **characterized in that** the spacer member (50) has a continuous abutment face (51) opposite a continuous support-base face (10) set accordingly, and the faces (51 and 10) are set at an angle to the longitudinal axis (**L**) of the shock-absorbing leg, and the spacer member (50) has a bearing face (50a) facing the spring plate (5) at a right angle to the longitudinal axis (**L**) of the shock-absorbing leg.

10. A mounting according to Claim 9, **characterized in that** longitudinally extending grooves (41; 52) are provided in the spacer member (40; 50).

## Revendications

1. Support d'une jambe de force à ressort d'un véhicule automobile sur sa carrosserie, qui comporte une coupelle de ressort (5) maintenant une garniture (3 ; 30) élastique, contre laquelle prend appui un ressort hélicoïdal (2), la garniture (3 ; 30) élastique présentant une surface d'appui de ressort (6) inclinée suivant la pente du ressort (2) et présentant une faible élasticité dans la zone d'appui du ressort (2), la garniture (3 ; 30) étant montée sur un élément d'écartement (4 ; 40 ; 50) maintenu sur la coupelle de ressort (5) et l'élément d'écartement (4 ; 40 ; 50) présentant des surfaces d'application (8a) ou une surface d'application (51) pour la garniture élastique (3 ; 30) qui dans la zone d'appui du ressort (2), se trouve à une distance (a) constante de la surface d'appui de ressort (6) de la garniture (3 ; 30).

2. Support selon la revendication 1, caractérisé en ce que l'élément d'écartement (4 ; 40 ; 50) est conique et la surface d'application (8a ; 51) est parallèle à la surface d'appui de ressort (6) de la garniture (3 ; 30) élastique et les deux surfaces sont inclinées sous un même angle par rapport à l'axe longitudinal (L) de la jambe de force à ressort ou du ressort (2), la surface de palier (4a ; 50a) tournée à l'opposé des surfaces d'appui (8a ; 51) , de l'élément d'écartement (4 ; 50) sur la coupelle de ressort (5), s'étendant sous un angle droit par rapport à l'axe longitudinal (L) de la jambe de force ou du ressort (2).

3. Support selon la revendication 1 ou l'une des revendications précédentes, caractérisé en ce que la garniture (3) élastique présente des évidements (7), dirigés vers l'élément d'écartement (4 ; 40) , qui présentent des surfaces de fond d'appui disposées dans un même plan, qui se trouvent chacune à une même distance (a) de la surface d'appui de ressort (6) et dans chacun des évidements (7) s'engagent des cames (8) de l'élément d'écartement (4 ; 40), qui s'appliquent avec leurs surfaces (8a) contre les surfaces de fond d'appui (9).

4. Support selon la revendication 1 ou l'une des revendications précédentes, caractérisé en ce que l'élément d'écartement (4 ; 40 ; 50) est fait d'un segment en matière plastique, rigide, d'une seule pièce, et comprend un élément en forme de plaque de même épaisseur de paroi (W), sur lequel sont formées les cames (8) d'une même épaisseur de paroi (W).

5. Support selon la revendication 1 ou l'une des revendications précédentes, caractérisé en ce que la garniture (3) élastique est faite d'un anneau qui présente, entre une extrémité du ressort (2) et la spire s'appliquant contre la surface d'appui (6), une zone (12) formant ressort par rapport à l'élément d'écartement (4 ; 40 ; 50).

6. Support selon la revendication 5, caractérisé en ce que l'élément d'écartement (4 ; 40 ; 50) forme un espace libre (11), dans cette zone (12) de la garniture (3 ; 30) élastique.

7. Support selon les revendications 5 et 6, caractérisé en ce que la zone (11) est formée par un organe en pont (12) formant ressort dans la garniture (3 ; 30) élastique qui est conçu sous la forme d'une application dynamique d'une spire terminale du ressort (2) contre la surface d'appui de ressort (6).

8. Support selon les revendications 5, 6 ou 7, caractérisé en ce que l'élément d'écartement (4 ; 40 ; 50) est interrompu dans la zone de l'organe en pont (12) formant ressort.

9. Support selon les revendications 1 ou 2, caractérisé en ce que l'élément d'écartement (50) présente une surface d'application (51) continue, qui fait face à une surface de fond d'appui (10) inclinée en conséquence et continue et les surfaces (51 et 10) sont inclinées, sous un angle par rapport à l'axe longitudinal (L) de la jambe de force et l'élément d'écartement (50) présente une surface de palier (50a) tournée vers la coupelle de ressort (5), sous un angle droit par rapport à l'axe longitudinal (L) de la jambe de force.

10. Support selon la revendication 9, caractérisé en ce que des rainures (41 ; 52) longitudinal es sont prévues dans l'élément d'écartement (40 ; 50).
